# EUROPEAN PATENT SPECIFICATION

(11) **EP 3 147 768 B1**
(45) Date of publication and mention of the grant of the patent: **02.12.2020**
(21) Application number: 15876510.7
(22) Date of filing: 28.02.2015
(51) Int. Cl.: G06F 3/0488, G06F 3/16, G06F 21/32, G06F 21/60

(54) **SCREEN INTERFACE UNLOCKING METHOD AND SCREEN INTERFACE UNLOCKING DEVICE**
BILDSCHIRMSCHNITTSTELLENENTRIEGELUNGSVERFAHREN UND BILDSCHIRMSCHNITTSTELLENENTRIEGELUNGSVORRICHTUNG
PROCÉDÉ DE DÉVERROUILLAGE D'INTERFACE D'ÉCRAN ET DISPOSITIF DE DÉVERROUILLAGE D'INTERFACE D'ÉCRAN

(30) Priority: 09.01.2015 CN 201510012126
(43) Date of publication of application: 29.03.2017
(73) Proprietor: Yulong Computer Telecommunication Scientific (Shenzhen) Co., Ltd., Shenzhen, Guangdong 518057 (CN)
(72) Inventor: LAI, Jiacheng, Shenzhen Guangdong 518057 (CN); YUAN, Gang, Shenzhen Guangdong 518057 (CN); ZHENG, Liliang, Shenzhen Guangdong 518057 (CN)
(74) Representative: Mewburn Ellis LLP
(86) International application number: PCT/CN2015/073443
(87) International publication number: WO 2016/110002

(56) References cited:
- CN-A- 103 246 454
- CN-A- 103 885 772
- CN-A- 104 166 518
- CN-A- 104 202 486
- CN-U- 204 066 116
- US-A1- 2012 157 044

## Description

### FIELD OF THE INVENTION

The present invention relates to the field of communication technology, and more particularly, to a screen interface unlocking method and a screen interface unlocking device.

### BACKGROUND OF THE INVENTION

Along with the rapid promotion of processing capacity of computers, the technology of protecting the safety of mobile phones has been fast developed, and user operations are becoming increasingly diverse. At present, a double-system unlocking solution of a terminal such as the mobile phone focuses on how to unlock to ensure the safety of the mobile phone of a user.

In the existing technical solution, in the case of a mobile phone stolen, when the mobile phone is awakened, the mobile phone will show a double-system unlocking interface. That is, the mobile phone showing the double-system unlocking interface is equivalent to tell others who stole the mobile phone that the mobile phone has important personal information, which may reduce the security of the mobile phone.

Therefore, a new kind of technical solution is needed, which can increase the concealment and the security of a secure system in a double-system terminal so as to avoid leakage of privacy data in the secure system.

CN 104202486 A discloses a mobile terminal unlocking method in which voice content and voiceprint information are used to determine whether to enter a normal mode or a guest mode.

CN 103885772 A discloses an unlocking method for an electronic device in which a plurality of different unlocking events can sequentially unlock different security levels.

### SUMMARY OF THE INVENTION

To solve the above problems, the present disclosure aims to provide a new kind of technical solution, which can increase the concealment and the security of a secure system in a double-system terminal so as to avoid leakage of privacy data in the secure system.

According to one aspect of the present disclosure, there is provided a screen interface unlocking method of a terminal as set out in independent claim 1.

According to another aspect of the present disclosure, there is provided a screen interface unlocking device for a terminal as set out in independent claim 4.

According to another aspect of the present disclosure, there is provided a terminal as set out in independent claim 7.

Further aspects of the invention are outlined in the dependent claims.

Embodiments which do not fall within the scope of the claims do not describe part of the present invention.

By means of the technical solution of the present invention, the concealment and the security of a secure system in a double-system terminal can be improved, thereby avoiding leakage of privacy data in the secure system.

### BRIEF DESCRIPTION OF THE DRAWINGS

FIG. 1 is a flowchart of a screen interface unlocking method according to an embodiment of the present disclosure;
FIG. 2 is a block diagram of a screen interface unlocking device according to an embodiment of the present disclosure;
FIG. 3 is a detailed flowchart of a non-claimed screen interface unlocking method according to an embodiment of the present disclosure;
FIG. 4 is a detailed flowchart of a non-claimed screen interface unlocking method according to the present disclosure;
FIG. 5 is a detailed flowchart of a non-claimed screen interface unlocking method according to yet another embodiment of the present disclosure; and
FIG. 6 is a block diagram of a terminal according to an embodiment of the present disclosure.

### DETAILED DESCRIPTION OF ILLUSTRATED EMBODIMENTS

In order to illustrate the embodiments or existing technical solutions more clearly, a brief description of drawings that assists the description of embodiments of present disclosure or existing art will be provided below. It should be noted that, in the case of no conflict, the embodiments of the present disclosure and the features of each embodiment can be combined mutually.

The invention will now be described in detail on the basis of preferred embodiments and drawings.

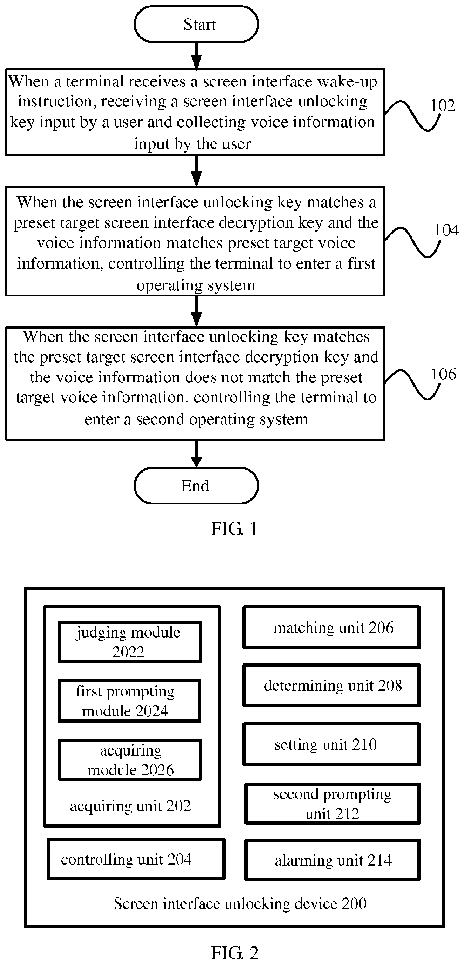

Referring to FIG. 1, FIG. 1 is a flowchart of a screen interface unlocking method according to an embodiment of the present disclosure.

As shown in FIG. 1, a screen interface unlocking method provided by the embodiment of the present disclosure includes: step 102, receiving a screen interface unlocking key input by a user and collecting voice information input by the user when a terminal receives a screen interface wake-up instruction; step 104, controlling the terminal to enter a first operating system when the screen interface unlocking key matches a preset target screen interface decryption key and the voice information matches preset target voice information; and step 106, controlling the terminal to enter a second operating system when the screen interface unlocking key matches the preset target screen interface decryption key and the voice information does not match the preset target voice information.

In the technical solution, during the process of screen unlocking, speech recognition is specially added and used to unlock the screen of the terminal such as a mobile phone, that is, the terminal receives a screen interface unlocking key input by a user and verifies the screen interface unlocking key, and at the same time the terminal acquires voice information input by the user, then it is determined whether to allow the user to access corresponding operating systems according to the screen interface unlocking key and the voice information. Specifically, when both the screen interface unlocking key and the voice information are successfully verified, the user is allowed to access the first operating system, namely, when the screen interface unlocking key is matched with a preset target screen interface decryption key and the voice information is matched with preset target voice information, then the user is allowed to access the first operating system; when only the screen interface unlocking key is successfully verified, the user is only allowed to access the second operating system, that is, when the screen interface unlocking key is matched with the preset target screen interface decryption key but the voice information is not matched with the preset target voice information, then the user is only allowed to enter the second operating system. In detail, the first operating system can be a secure system in a double-system terminal, and the second operating system can be a common system in the double-system terminal. In this way, based on the two-factor authentication, the concealment and the security of the secure system in the double-system terminal can be increased to avoid leakage of privacy data in the secure system and improve the user experience.

According to a non-claimed example, the way of screen unlocking includes, but not limited to, a voice unlocking mode and a touch unlocking mode. The step of receiving a screen interface unlocking key input by a user and collecting voice information input by the user when a terminal receives a screen interface wake-up instruction specifically includes: judging a present way of screen unlocking of the terminal when the terminal receives the screen interface wake-up instruction; prompting the user to input screen unlocking passwords corresponding to the touch unlocking mode when the present way of screen unlocking is the touch unlocking mode; and receiving the screen unlocking passwords input by the user and acquiring the voice information input by the user; further includes: matching the screen unlocking passwords with the preset target screen interface decryption key, and analyzing the voice information to generate voiceprint data, and matching the voiceprint data with preset voiceprint data; determining that the voice information is matched with the preset target voice information when the voiceprint data is matched with the preset voiceprint data.

In the technical solution, according to the invention, the present way of screen unlocking is the touch unlocking mode, the terminal receives a touch operation input by the user and acquires the voice information input by the user at the same time, and verifies the touch operation and the voice information at the same time, only when both the touch operation and the voice information are successfully verified, namely, only when both the voice information and the touch operation pass their verification steps, the terminal can access the first operating system, namely the secure system; when only the touch operation passes its verification step, then the terminal can access the second operation system, namely the common system. In detail, a verification method of voice information at least includes: analyzing the voice information to generate corresponding voiceprint data, and comparing the voiceprint data with the preset voiceprint data. Since the voiceprint data can reflect voice features of a user, namely, the voiceprint data can be used to represent voice features of a user, as a result, an owner of the terminal can input and store preset voiceprint data in the terminal, therefore, as long as the voiceprint data acquired by the terminal is matched with the preset voiceprint data, that means the user is the owner himself, at this time, the user is allowed to enter the secure system, otherwise not allowed to enter the secure system, so as to ensure the security of personal information and user data in the secure system.

According to a non-claimed example, the step of receiving a screen interface unlocking key input by a user and collecting voice information input by the user when a terminal receives a screen interface wake-up instruction further includes: directly acquiring the voice information input by the user and taking the voice information as the screen unlocking passwords when the present way of screen unlocking is the voice unlocking mode; and analyzing the voice information to generate corresponding voiceprint data, and matching the voiceprint data with the preset voiceprint data; determining that the screen interface unlocking key is matched with the preset target screen interface unlocking key when the voiceprint data is matched with the preset voiceprint data; determining whether the voice information includes preset keywords when the voiceprint data is matched with the preset voiceprint data; and determining that the voice information is matched with the preset target voice information when the voice information includes the preset keywords.

In the technical solution, according to the non-claimed example above, when the present way of screen unlocking is the voice unlocking mode, the terminal directly acquires the voice information input by the user and analyzes the voice information to generate corresponding voiceprint data, so when the voiceprint data acquired by the terminal is matched with the preset voiceprint data input by the owner of the terminal, that means the user is the owner himself, at this time, the user is allowed to enter the common system. Furthermore, the terminal determines whether the voice information includes preset keywords, when the voice information includes the preset keywords, then the user is allowed to access the secure system. Thus, the user does not need to unlock the terminal by means of touch unlocking and does not have to input the screen unlocking passwords on the screen of the terminal, the terminal can access the secure system as long as the user says the keywords, which can not only avoid tedious touch operations, but also can ensure the security of personal information and user data in the secure system and improve the user experience.

In the above technical solution, preferably, the screen interface unlocking method further includes: setting the target screen interface unlocking key, the preset voiceprint data and/or the preset keywords according to received setting commands.

In the technical solution, according to the non-claimed example, because double unlocking information such as the preset voiceprint data and the preset keywords are set, therefore the security of the secure system and the concealment of the unlocking information can be better safeguarded. That is, the way of setting the preset voiceprint data and the preset keywords can better safeguard the concealment of the unlocking information and the security of the secure system.

In the technical solution according to the embodiment of the invention, preferably, the screen interface unlocking method further includes: prompting the user that unlocking fails when the screen interface unlocking key is not matched with the preset target screen interface decryption key and the voice information is not matched with the preset target voice information; outputting an alarm prompt when the number of failed to unlock the screen reaches a preset number in succession.

In this technical solution, outputting an alarm prompt when the screen interface unlocking key and the voice information fail to validation process, namely, the screen interface unlocking key is not matched with the preset target screen interface decryption key and the voice information is not matched with the preset target voice information, and the number of failed to unlock the screen reaches the preset number in succession, can ensure the safety of the terminal. Specifically, the method of outputting an alarm prompt includes, but not limited to, locking the terminal, sending information to at least one related terminal, sending GPS (Global Position System) information to the at least one related terminal, etc.

Referring to FIG. 2, FIG. 2 is a block diagram of a screen interface unlocking device according to an embodiment of the present disclosure.

As shown in FIG. 2, a screen interface unlocking device 200 provided by this embodiment of the present disclosure is applied to a terminal such as a mobile phone. The terminal includes a first operating system and a second operating system, wherein the security level of the first operating system is higher than the security level of the second operating system. The screen interface unlocking device 200 includes: an acquiring unit 202 and a controlling unit 204. The acquiring unit 202 is configured for receiving a screen interface unlocking key input by a user and collecting voice information input by the user when the terminal receives a screen interface wake-up instruction. The controlling unit 204 is configured for controlling the terminal to enter the first operating system when the screen interface unlocking key matches a preset target screen interface decryption key and the voice information matches preset target voice information; and controlling the terminal to enter the second operating system when the screen interface unlocking key matches the preset target screen interface decryption key and the voice information does not match the preset target voice information.

In the technical solution, during the process of screen unlocking, speech recognition is specially added and used to unlock the screen of the terminal, that is, the terminal receives a screen interface unlocking key input by a user and verifies the screen interface unlocking key, and at the same time the terminal acquires voice information input by the user, then it is determined whether to allow the user to access corresponding operating systems according to the screen interface unlocking key and the voice information. Specifically, when both the screen interface unlocking key and the voice information are successfully verified, the user is allowed to access the first operating system, namely, when the screen interface unlocking key is matched with the preset target screen interface decryption key and the voice information is matched with the preset target voice information, then the user is allowed to access the first operating system; when only the screen interface unlocking key is successfully verified, the user is only allowed to access the second operating system, that is, when the screen interface unlocking key is matched with the preset target screen interface decryption key but the voice information is not matched with the preset target voice information, then the user is only allowed to enter the second operating system. In detail, the first operating system can be a secure system in a double-system terminal, and the second operating system can be a common system in the double-system terminal. In this way, based on the two-factor authentication, the concealment and the security of the secure system in the double-system terminal can be improved so as to avoid leakage of privacy data in the secure system and improve the user experience.

According to a non-claimed example, the way of screen unlocking includes, but not limited to, a voice unlocking mode and a touch unlocking mode. The acquiring unit 202 includes a judging module 2022, a first prompting module 2024 and an acquiring module 2026. The judging module 2022 is configured for judging a present way of screen unlocking of the terminal when the terminal receives the screen interface wake-up instruction; the first prompting module 2024 is configured for prompting the user to input screen unlocking passwords corresponding to the touch unlocking mode when the present way of screen unlocking is the touch unlocking mode; the acquiring module 2026 is configured for receiving the screen unlocking passwords input by the user and acquiring the voice information input by the user. The screen interface unlocking device 200 further includes a matching unit 206 configured for matching the screen unlocking passwords with the preset target screen interface decryption key, and analyzing the voice information to generate voiceprint data, and matching the voiceprint data with preset voiceprint data; and a determining unit 208 configured for determining that the voice information is matched with the preset target voice information when the voiceprint data is matched with the preset voiceprint data.

In the technical solution, according to the invention the present way of screen unlocking is the touch unlocking mode, the terminal receives a touch operation input by the user and acquires the voice information input by the user at the same time, and verifies the touch operation and the voice information at the same time, only when both the touch operation and the voice information are successfully verified, namely, only when both the voice information and the touch operation pass their verification steps, the terminal can access the first operating system, namely the secure system; when only the touch operation is successfully verified, namely, only the touch operation passes its verification step, then the terminal can access the second operation system, namely the common system. In detail, the way of verifying the voice information at least includes: analyzing the voice information to generate corresponding voiceprint data, and comparing the voiceprint data with the preset voiceprint data. Since the voiceprint data can reflect voice features of a user, namely, the voiceprint data can be used to represent voice features of a user, as a result, an owner of the terminal can input and store preset voiceprint data in the terminal, therefore, as long as the voiceprint data acquired by the terminal is matched with the preset voiceprint data, that means the user is the owner himself, at this time, the user is allowed to enter the secure system, otherwise not allowed to enter the secure system, so as to ensure the security of personal information and user data in the secure system.

In the above technical solution, according to a non-claimed example, the acquiring module 2026 is further configured for directly acquiring the voice information input by the user and taking the voice information as the screen unlocking passwords when the present way of screen unlocking is the voice unlocking mode. The matching unit 206 is further configured for analyzing the voice information to generate corresponding voiceprint data, and matching the voiceprint data with the preset voiceprint data. The determining unit 208 is further configured for determining that the screen interface unlocking key is matched with the preset target screen interface unlocking key when the voiceprint data is matched with the preset voiceprint data, and determining whether the voice information includes preset keywords when the voiceprint data is matched with the preset voiceprint data, and determining that the voice information is matched with the preset target voice information when the voice information includes the preset keywords.

In the technical solution, according to the non-claimed example above when the present way of screen unlocking is the voice unlocking mode, the terminal directly acquires the voice information input by the user and analyzes the voice information to generate corresponding voiceprint data, so when the voiceprint data acquired by the terminal is matched with the preset voiceprint data input by the owner of the terminal, that means the user is the owner himself, at this time, the user is allowed to enter the common system. Furthermore, the terminal determines whether the voice information includes preset keywords, when the voice information includes the preset keywords, then the user is allowed to access the secure system. Thus, the user does not need to unlock the terminal by means of touch unlocking and does not have to input the screen unlocking passwords on the screen of the terminal, the terminal can access the secure system as long as the user says the keywords, which can not only avoid tedious touch operations, but also can ensure the security of personal information and user data in the secure system and improve the user experience.

In the above technical solution, according to the non-claimed example above, the screen interface unlocking device 200 further includes a setting unit 210 configured for setting the target screen interface unlocking key, the preset voiceprint data and/or the preset keywords according to received setting commands.

In the technical solution, according to the non-claimed example above, because double unlocking information such as the preset voiceprint data and the preset keywords are set, therefore the security of the secure system and the concealment of the unlocking information can be better safeguarded. That is, the way of setting the preset voiceprint data and the preset keywords can better safeguard the concealment of the unlocking information and the security of the secure system.

In technical solution according to the invention, preferably, the screen interface unlocking device 200 further includes a second prompting unit 212 and an alarming unit 214. The second prompting unit 212 is configured for prompting the user that unlocking fails when the screen interface unlocking key is not matched with the preset target screen interface decryption key and the voice information is not matched with the preset target voice information. The alarming unit 214 is configured for outputting an alarm prompt when the number of failed to unlock the screen reaches a preset number in succession.

In this technical solution, the alarming unit is configured for outputting an alarm prompt when the screen interface unlocking key and the voice information fail the validation process, namely, the screen interface unlocking key is not matched with the preset target screen interface decryption key and the voice information is not matched with the preset target voice information, and the number of failed to unlock the screen reaches the preset number in succession, which can ensure the safety of the terminal. Specifically, the method of outputting an alarm prompt includes, but not limited to, locking the terminal, sending information to at least one related terminal, sending GPS (Global Position System) information to the at least one related terminal, etc.

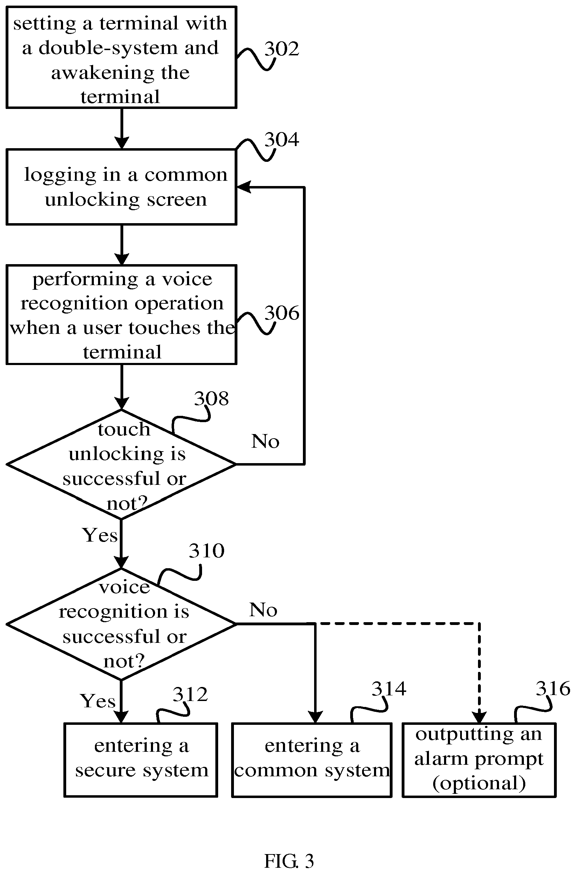

Referring to FIG. 3, FIG. 3 is a detailed flowchart of a screen interface unlocking method according to a non-claimed example. As shown in FIG. 3, the screen interface unlocking method provided by the embodiment of the present disclosure includes at least the following steps.

Step 302, setting a terminal with a double-system and awakening the terminal to activate the double-system.

Step 304, logging in a common unlocking screen and performing a touch unlocking operation.

Step 306, performing a voice recognition operation when a user touches a screen of the terminal. In detail, after activating the double-system, a prompt of "enter preset voice data" will pop up, and according to an unlocking mode chose by the user, one or more voice recognition operations need be input in the terminal and sliding unlock/pattern unlock data need be preset in the terminal.

Step 308, determining whether a screen interface unlocking key (namely, a sliding/pattern) input by the user is matched with a preset screen interface unlocking key or not. When the screen interface unlocking key is matched with the preset screen interface unlocking key, performing step 310; when the screen interface unlocking key isn't matched with the preset screen interface unlocking key, returning to the step 304.

Step 310, determining whether the voice recognition operation is matched with preset voice recognition data or not. When the voice recognition operation is matched with the preset voice recognition data, performing step 312; when the voice recognition operation is not matched with preset voice recognition data, performing step 314 or step 316. In detail, a verification method of voice information at least includes: analyzing the voice information to generate corresponding voiceprint data, and comparing the voiceprint data with the preset voiceprint data. Since the voiceprint data can reflect voice features of a user, namely, the voiceprint data can be used to represent voice features of a user, as a result, an owner of the terminal can input and store preset voiceprint data in the terminal, therefore, as long as the voiceprint data acquired by the terminal is matched with the preset voiceprint data, that means the user is the owner himself, at this time, the user is allowed to enter the secure system, otherwise not allowed to enter the secure system, so as to ensure the security of personal information and user data in the secure system.

Step 312, entering a secure system of the terminal.

Step 314, entering a common system of the terminal.

Step 316, outputting an alarm prompt when one or more unlocking operations fail. Specifically, the method of outputting an alarm prompt includes, but not limited to, locking the terminal, sending information to at least one related terminal, sending GPS (Global Position System) information to the at least one related terminal, etc.

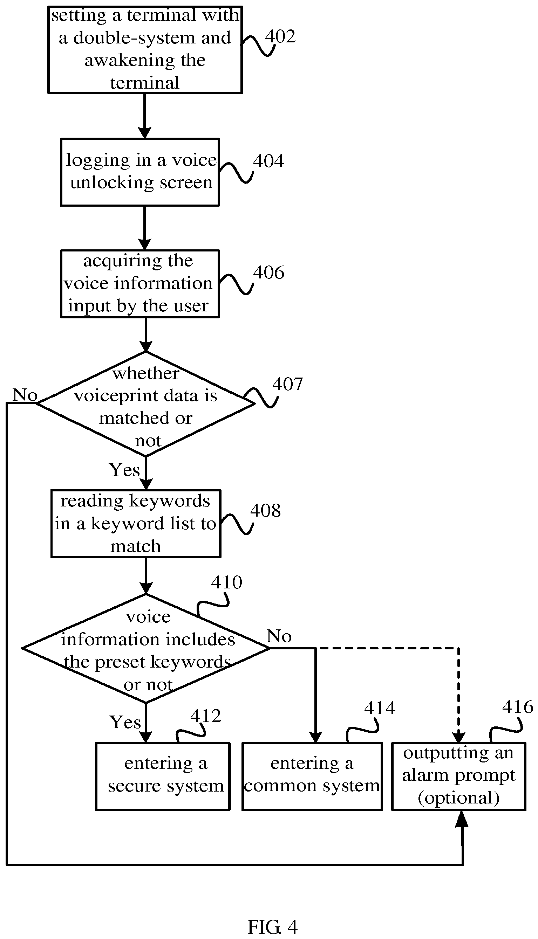

Referring to FIG. 4, FIG. 4 is a detailed flowchart of a non-claimed screen interface unlocking method according to the present disclosure.

As shown in FIG. 4, the screen interface unlocking method includes at least the following steps.

Step 402, setting a terminal with a double-system and awakening the terminal to activate the double-system. Specifically, one or more keywords for voice recognition can be preset in the terminal.

Step 404, logging in a voice unlocking screen and input voice information input by a user.

Step 406, acquiring the voice information input by the user to unlock the terminal.

Step 407, analyzing the voice information to generate voiceprint data and comparing the voiceprint data with preset voiceprint data to determine whether the voiceprint data is matched with the preset voiceprint data or not. When the voiceprint data is matched with the preset voiceprint data, performing step 408; when the voiceprint data is not matched with the preset voiceprint data, performing step 416.

Step 408, reading keywords in a keyword list and matching the keywords with the voice information.

Step 410, determining whether the voice information includes the preset keywords in the keyword list or not. When the voice information includes the preset keywords, performing step 412; when the voice information does not include the preset keywords, performing step 414 or step 416.

Step 412, entering a secure system of the terminal.

Step 414, entering a common system of the terminal.

Step 416, outputting an alarm prompt when one or more unlocking operations fail. Specifically, the method of outputting an alarm prompt includes, but not limited to, locking the terminal, sending information to at least one related terminal, sending GPS (Global Position System) information to the at least one related terminal, etc.

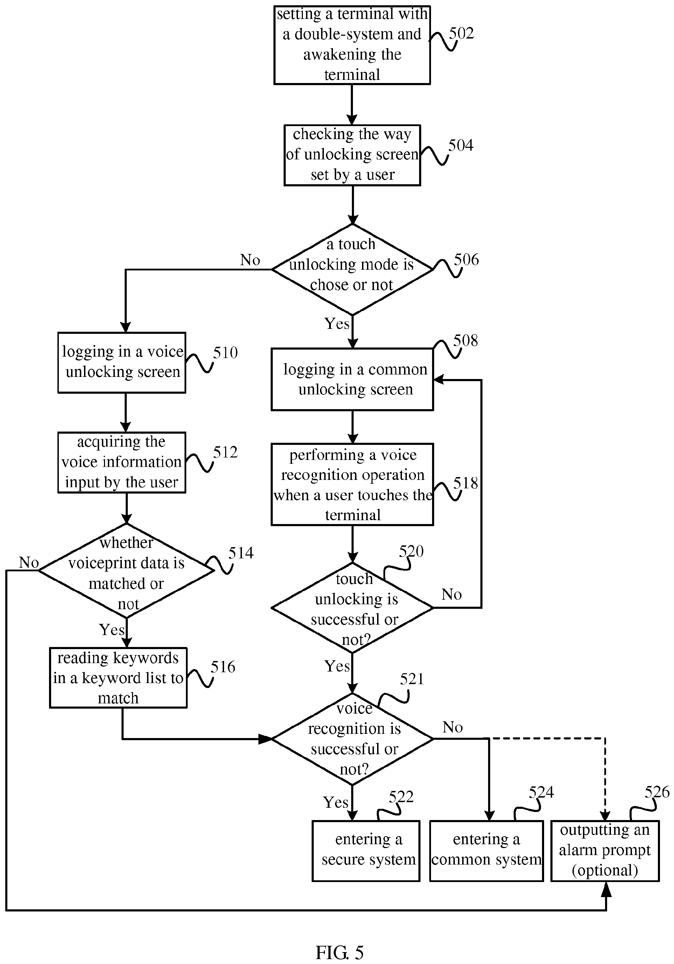

Referring to FIG. 5, FIG. 5 is a detailed flowchart of a screen interface unlocking method according to a non-claimed example.

As shown in FIG. 5, the screen interface unlocking method provided by the embodiment of the present disclosure includes at least the following steps.

Step 502, setting a terminal with a double-system and awakening the terminal to activate the double-system.

Step 504, checking the way of unlocking screen set by a user. In particular, after activating the double-system, a prompt of "enter preset voice data" will pop up, and according to an unlocking mode chose by the user, different preset data needs to be input in the terminal, and the terminal displays different unlocking interfaces accordingly.

Step 506, determining whether a touch unlocking mode is chose or not to unlock a screen of the terminal. When the touch unlocking mode is chose, performing step 508; when the touch unlocking mode is not chose, performing step 510.

Step 508, entering a common unlocking screen.

Step 510, logging in a voice unlocking screen and input voice information input by a user.

Step 512, acquiring the voice information input by the user to unlock the screen.

Step 514, analyzing the voice information to generate voiceprint data and comparing the voiceprint data with preset voiceprint data to determine whether the voiceprint data is matched with the preset voiceprint data or not. When the voiceprint data is matched with the preset voiceprint data, performing step 516; when the voiceprint data is not matched with the preset voiceprint data, performing step 526.

Step 516, reading keywords in a keyword list and matching the keywords with the voice information.

Step 518, performing a voice recognition operation when a user touches a screen of the terminal.

Step 520, determining whether the screen of the terminal is unlocked or not by mans of the touch unlocking mode. When the screen of the terminal is unlocked by mans of the touch unlocking mode, performing step 521; when the screen of the terminal is not unlocked by mans of the touch unlocking mode, returning to the step 508. That is, determining whether a screen interface unlocking key input by the user is matched with a preset screen interface unlocking key or not. When the screen interface unlocking key is matched with the preset screen interface unlocking key, performing step 521; when the screen interface unlocking key isn't matched with the preset screen interface unlocking key, returning to the step 508. Specifically, when the screen of the terminal is not unlocked by mans of the touch unlocking mode, the process of voice recognition will not be performed and the terminal returns to the common unlocking interface; when the screen of the terminal is unlocked by mans of the touch unlocking mode, the terminal will further determines whether the voice recognition operation is successfully or not.

Step 521, determining whether the screen of the terminal is unlocked or not by mans of the voice recognition operation. When the screen of the terminal is unlocked by mans of the voice recognition operation, performing step 522; when the screen of the terminal is not unlocked by mans of the voice recognition operation, performing step 524 or step 526. That is, determining whether the voice recognition operation is matched with preset voice recognition data or not; when the voice recognition operation is matched with the preset voice recognition data, performing step 522; when the voice recognition operation is not matched with preset voice recognition data, performing step 524 or step 526.

Step 522, entering a secure system of the terminal.

Step 524, entering a common system of the terminal.

Step 526, outputting an alarm prompt when one or more unlocking operations fail. Specifically, the method of outputting an alarm prompt includes, but not limited to, locking the terminal, sending information to at least one related terminal, sending GPS (Global Position System) information to the at least one related terminal, etc.

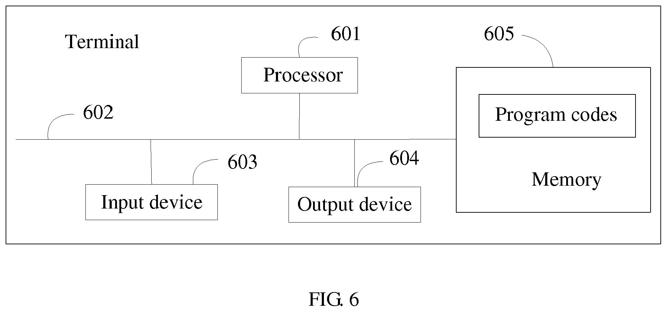

Referring to FIG. 6, FIG. 6 is a block diagram of a terminal according to an embodiment of the present disclosure.

As shown in FIG. 6, the terminal provided by this embodiment of the present disclosure includes: at least one input device 603, at least one output 604, at least one processor 601, such as CPU, a memory 605 and a at least one bus 602, the at least one processor 601 can combined with the screen interface unlocking device 200 as shown in FIG. 2.

The bus 602 is used to connect the at least one input device 603, the at least one output device 604, the at least one processor 601 and the memory 605.

Preferably, the input device 603 includes a touch panel of the terminal and is used to receive a screen interface unlocking key and a screen interface wake-up instruction; in addition, the input device 603 includes also a microphone of the terminal and is used to acquire voice information input by a user.

Preferably, the output device 604 can be a display screen or a player of the terminal and is used to prompt the user to input screen unlocking passwords corresponding to the way of touch unlocking operation.

Preferably, the memory 605 can be a high speed RAM (Random Access Memory) memory, and can also be a non-volatile memory, such as magnetic disk storage. The memory 605 may also be used to store a group of grogram codes or computer programs for implementing processes, and the input device 603, the output device 604 and the processor 601 can call and read the grogram codes or computer programs stored in the memory 605 to execute the following operations:
the input device 603 is configured for receiving a screen interface unlocking key input by a user and collecting voice information input by the user when receiving a screen interface wake-up instruction;
the processor 601 is configured for controlling the terminal to enter a first operating system when the screen interface unlocking key is matched with a preset target screen interface decryption key and the voice information is matched with preset target voice information;
the processor 601 is also configured for controlling the terminal to enter a second operating system when the screen interface unlocking key is matched with the preset target screen interface decryption key and the voice information is not matched with the preset target voice information; wherein, the security level of the first operating system is higher than the security level of the second operating system.

According to the invention, the way of screen unlocking includes a voice unlocking mode and a touch unlocking mode. When receiving the screen interface wake-up instruction, the input device 603 receives the screen interface unlocking key input by the user and acquires the voice information input by the user, which includes that in detail:
the processor 601 determines a present way of screen unlocking of the terminal when the input device 603 receives the screen interface wake-up instruction;
the output device 604 prompts the user to input screen unlocking passwords corresponding to the touch unlocking mode;
the input device 603 receives the screen unlocking passwords input by the user and acquires the voice information input by the user; and
further includes:
   the processor 601 matches the screen unlocking passwords with the preset target screen interface decryption key, and analyzes the voice information to generate voiceprint data, and matches the voiceprint data with preset voiceprint data;
   the processor 601 determines that the voice information is matched with the preset target voice information when the voiceprint data is matched with the preset voiceprint data.

According to a non-claimed example, after the processor 601 determines a present way of screen unlocking of the terminal, the input device 603, the output device 604 and the processor 601 can execute the following operations:
the input device 603 directly acquires the voice information input by the user and takes the voice information as the screen unlocking passwords when the present way of screen unlocking is the voice unlocking mode;
the processor 601 analyzes the voice information to generate corresponding voiceprint data, and matches the voiceprint data with the preset voiceprint data;
the processor 601 determines that the screen interface unlocking key is matched with the preset target screen interface unlocking key when the voiceprint data is matched with the preset voiceprint data;
the processor 601 determines whether the voice information includes preset keywords when the voiceprint data is matched with the preset voiceprint data; and
the processor 601 determines that the voice information is matched with the preset target voice information when the voice information includes the preset keywords.

Further optional, the processor 601 sets the target screen interface unlocking key, the preset voiceprint data and/or the preset keywords according to received setting commands.

In an optional embodiment, the output device 604 prompts the user that unlocking fails when the screen interface unlocking key is not matched with the preset target screen interface decryption key and the voice information is not matched with the preset target voice information; and

the output device 604 outputs an alarm prompt when the number of failed to unlock the screen reaches a preset number in succession.

By means of the technical solution of the present invention, the concealment and security of a secure system in a double-system terminal can be increased to avoid leakage of privacy data in the secure system.

## Claims

1. A screen interface unlocking method of a terminal, wherein, the terminal comprises a first operating system and a second operating system, a security level of the first operating system being higher than a security level of the second operating system, wherein the terminal comprises an input device (603, 202) configured to receive a screen interface unlocking password input by a user in a touch unlocking mode and to collect voice information input by the user, and wherein the terminal comprises an output device (604, 2024) configured to prompt the user to input a screen unlocking password corresponding to the touch unlocking mode; wherein, the screen interface unlocking method comprises:
upon receiving a screen interface wake-up instruction, prompting a user to input screen unlocking password corresponding to the touch unlocking mode
in response to the prompting, receiving (102) the screen unlocking password input by the user and at the same time collecting voice information input by the user;
comparing the screen unlocking password with a preset target screen interface decryption key;
controlling (104) the terminal to enter the first operating system when the screen unlocking password matches the preset target screen interface decryption key and the voice information matches preset target voice information; and
controlling (106) the terminal to enter the second operating system when the screen unlocking password matches the preset target screen interface decryption key and the voice information does not match the preset target voice information.

2. The screen interface unlocking method according to claim 1, further comprising:
analyzing the voice information to generate voiceprint data, and comparing (521) the voiceprint data with preset voiceprint data; and
determining that the voice information is matched with the preset target voice information when the voiceprint data is matched with the preset voiceprint data.

3. The screen interface unlocking method according to claim 1 or 2, further comprising:
prompting the user that unlocking fails when the screen unlocking password is not matched with the preset target screen interface decryption key and the voice information is not matched with the preset target voice information; and
outputting an alarm prompt when the number of failed to unlock the screen reaches a preset number in succession.

4. A screen interface unlocking device (200) for a terminal, wherein the terminal comprises a first operating system and a second operating system, a security level of the first operating system being higher than a security level of the second operating system, and wherein the terminal has screen unlocking functionality comprising a voice unlocking mode and a touch unlocking mode; wherein the screen interface unlocking device comprises:
an acquiring unit (202) comprising:
a first prompting module (2024) configured to prompt the user to input a screen unlocking password corresponding to the touch unlocking mode upon receipt of a screen interface wake-up instruction; and
an acquiring module (2026) configured, in response to the prompt, to receive the screen unlocking password input by the user and acquire voice information input by the user;
a matching unit (206) configured to compare the screen unlocking password with a preset target screen interface decryption key; and
a controlling unit (204) configured to:
control the terminal to enter the first operating system when the screen unlocking password matches the preset target screen interface decryption key and the voice information matches preset target voice information; and
control the terminal to enter the second operating system when the screen unlocking password matches the preset target screen interface decryption key and the voice information does not match the preset target voice information.

5. The screen interface unlocking device according to claim 4 wherein the matching unit (206) is configured to analyze the voice information to generate voiceprint data, and compare the voiceprint data with preset voiceprint data; and
wherein the screen interface unlocking device further comprises a determining unit (208) configured to determine that the voice information is matched with the preset target voice information when the voiceprint data is matched with the preset voiceprint data.

6. The screen interface unlocking device according to claim 4 or 5, further comprising:
a second prompting unit (212) configured for prompting the user that unlocking fails when the screen interface unlocking key is not matched with the preset target screen interface decryption key and the voice information is not matched with the preset target voice information; and
an alarming unit (214) configured for outputting an alarm prompt when the number of failed to unlock the screen reaches a preset number in succession.

7. A terminal, comprising a bus (602), an input device (603), an output device (604), a memory (605) and a processor (601), wherein the terminal is configured to have a first operating system and a second operating system, a security level of the first operating system being higher than a security level of the second operating system, and wherein:
the bus is used to connect the input device, the output device, the memory and the processor;
the input device is configured to receive a screen interface unlocking password input by a user in a touch unlocking mode and to collect voice information input by the user when receiving a screen interface wake-up instruction;
the output device (604) is configured to prompt the user to input a screen unlocking password corresponding to the touch unlocking mode; and
the memory stores a group of program codes for implementing processes, which when executed by the processor causes the processor to perform the method according to any one of claims 1 to 3.

## Patentansprüche

1. Bildschirmschnittstellen-Entsperrungsverfahren für ein Endgerät, wobei das Endgerät ein erstes Betriebssystem und ein zweites Betriebssystem umfasst, wobei eine Sicherheitsstufe des ersten Betriebssystems höher ist als eine Sicherheitsstufe des zweiten Betriebssystems, wobei das Endgerät eine Eingabevorrichtung (603, 202) umfasst, die ausgelegt ist, um eine Bildschirmschnittstellen-Entsperrungspassworteingabe durch einen Benutzer in einem Berührungsentsperrungsmodus zu empfangen, und um eine Sprachinformationseingabe durch den Benutzer zu sammeln, und wobei das Endgerät eine Ausgabevorrichtung (604, 2024) umfasst, die ausgelegt ist, um den Benutzer aufzufordern, ein Bildschirmentsperrungspasswort entsprechend dem Berührungsentsperrungsmodus einzugeben; wobei das Bildschirmschnittstellen-Entsperrungsverfahren Folgendes umfasst:
nach Empfangen eines Bildschirmschnittstellen-Aktivierungsbefehls, das Auffordern des Benutzers, ein Bildschirmentsperrungspasswort entsprechend dem Berührungsentsperrungsmodus einzugeben;
als Antwort auf das Auffordern, das Empfangen (102) der Bildschirmentsperrungspassworteingabe durch den Benutzer und gleichzeitig das Sammeln von durch den Benutzer eingegebenen Sprachinformationen;
das Vergleichen des Bildschirmentsperrungspassworts mit einem voreingestellten Zielbildschirmschnittstellen-Entschlüsselungsschlüssel;
das Steuern (104) des Endgeräts, um in dem ersten Betriebssystem betrieben zu werden, wenn das Bildschirmentsperrungspasswort mit dem voreingestellten Zielbildschirmschnittstellen-Entschlüsselungsschlüssel übereinstimmt und wenn die Sprachinformationen mit voreingestellten Zielsprachinformationen übereinstimmen; und
das Steuern (106) des Endgeräts, um in dem zweiten Betriebssystem betrieben zu werden, wenn das Bildschirmentsperrungspasswort mit dem voreingestellten Zielbildschirmschnittstellen-Entschlüsselungsschlüssel übereinstimmt und wenn die Sprachinformationen nicht mit den voreingestellten Zielsprachinformationen übereinstimmen.

2. Bildschirmschnittstellenentsperrungsverfahren nach Anspruch 1, das ferner Folgendes umfasst:
das Analysieren der Sprachinformationen, um Stimmenausdrucksdaten zu erzeugen, und das Vergleichen (521) der Stimmenausdrucksdaten mit voreingestellten Stimmenausdrucksdaten; und
das Bestimmen, dass die Sprachinformationen mit den voreingestellten Zielsprachinformationen übereinstimmen, wenn die Stimmenausdrucksdaten mit den voreingestellten Stimmenausdrucksdaten übereinstimmen.

3. Bildschirmschnittstellenentsperrungsverfahren nach Anspruch 1 oder 2, das ferner Folgendes umfasst:
das Auffordern des Benutzers, dass das Entsperren fehlgeschlagen ist, wenn das Bildschirmentsperrungspasswort nicht mit dem voreingestellten Zielbildschirmschnittstellen-Entschlüsselungsschlüssel übereinstimmt und die Sprachinformationen nicht mit den voreingestellten Zielsprachinformationen übereinstimmen; und
das Ausgeben einer Alarmaufforderung, wenn die Anzahl der fehlgeschlagenen Versuche, den Bildschirm zu entsperren, nacheinander eine voreingestellte Anzahl erreicht.

4. Bildschirmschnittstellenentsperrungsvorrichtung (200) für ein Endgerät, wobei das Endgerät ein erstes Betriebssystem und ein zweites Betriebssystem umfasst, wobei eine Sicherheitsstufe des ersten Betriebssystems höher ist als eine Sicherheitsstufe des zweiten Betriebssystems, und wobei das Endgerät eine Bildschirmentsperrungsfunktionalität aufweist, die einen Sprachentsperrungsmodus und einen Berührungsentsperrungsmodus umfasst; wobei die Bildschirmschnittstellenentsperrungsvorrichtung Folgendes umfasst:
eine Erfassungseinheit (202), die Folgendes umfasst:
ein erstes Aufforderungsmodul (2024), das ausgelegt ist, um den Benutzer aufzufordern, nach Empfang eines Bildschirmschnittstellenaktivierungsbefehls ein Bildschirmentsperrungspasswort einzugeben, das dem Berührungsentsperrungsmodus entspricht;
und
ein Erfassungsmodul (2026), das ausgelegt ist, als Antwort auf die Aufforderung die Bildschirmentsperrungspassworteingabe durch den Benutzer zu empfangen und um von dem Benutzer eingegebene Sprachinformationen zu erfassen;
eine Abgleicheinheit (206), die ausgelegt ist, um das Bildschirmentsperrungspasswort mit einem voreingestellten Zielbildschirmschnittstellen-Entschlüsselungsschlüssel zu vergleichen; und
eine Steuereinheit (204), die ausgelegt ist, um:
das Endgerät zu steuern, damit dieses im ersten Betriebssystem betrieben wird, wenn das Bildschirmentsperrungspasswort mit dem voreingestellten Zielbildschirmschnittstellen-Entschlüsselungsschlüssel übereinstimmt und die Sprachinformationen mit den voreingestellten Zielsprachinformationen übereinstimmen; und
das Endgerät zu steuern, damit dieses im zweiten Betriebssystem betrieben wird, wenn das Bildschirmentsperrungspasswort mit dem voreingestellten Zielbildschirmschnittstellen-Entschlüsselungsschlüssel übereinstimmt und die Sprachinformationen nicht mit den voreingestellten Zielsprachinformationen übereinstimmen.

5. Bildschirmschnittstellenentsperrungsvorrichtung nach Anspruch 4, wobei
die Abgleicheinheit (206) ausgelegt ist, um die Sprachinformationen zu analysieren, um Stimmenausdrucksdaten zu erzeugen und die Stimmenausdrucksdaten mit voreingestellten Stimmenausdrucksdaten zu vergleichen; und
wobei die Bildschirmschnittstellenentsperrungsvorrichtung ferner eine Bestimmungseinheit (208) umfasst, die ausgelegt ist, um zu bestimmen, dass die Sprachinformationen mit den voreingestellten Zielsprachinformationen übereinstimmen, wenn die Stimmenausdrucksdaten mit den voreingestellten Stimmenausdrucksdaten übereinstimmen.

6. Bildschirmschnittstellenentsperrungsvorrichtung nach Anspruch 4 oder 5, die ferner Folgendes umfasst:
eine zweite Aufforderungseinheit (212), die ausgelegt ist, um den Benutzer aufzufordern, dass das Entsperren fehlgeschlagen ist, wenn der Bildschirmschnittstellen-Entsperrungsschlüssel nicht mit dem voreingestellten Zielbildschirmschnittstellen-Entschlüsselungsschlüssel übereinstimmt, und die Sprachinformationen nicht mit den voreingestellten Zielspracheinformationen übereinstimmen; und
eine Alarmierungseinheit (214), die ausgelegt ist, um eine Alarmaufforderung auszugeben, wenn die Anzahl der fehlgeschlagenen Versuche, den Bildschirm zu entsperren, nacheinander eine voreingestellte Anzahl erreicht.

7. Endgerät, umfassend einen Bus (602), eine Eingabevorrichtung (603), eine Ausgabevorrichtung (604), einen Arbeitsspeicher (605) und einen Prozessor (601), wobei das Endgerät ausgelegt ist, um ein erstes Betriebssystem und ein zweites Betriebssystem aufzuweisen, wobei eine Sicherheitsstufe des ersten Betriebssystems höher ist als eine Sicherheitsstufe des zweiten Betriebssystems und wobei:
der Bus verwendet wird, um die Eingabevorrichtung, die Ausgabevorrichtung, den Arbeitsspeicher und den Prozessor zu verbinden;
die Eingabevorrichtung ausgelegt ist, um eine Bildschirmschnittstellenentsperrungspassworteingabe durch einen Benutzer in einem Berührungsentsperrungsmodus zu empfangen, und um von dem Benutzer eingegebene Sprachinformationen zu sammeln, wenn ein Bildschirmschnittstellenaktivierungsbefehl empfangen wird;
die Ausgabevorrichtung (604) ausgelegt ist, um den Benutzer aufzufordern, ein Bildschirmentsperrungspasswort entsprechend dem Berührungsentsperrungsmodus einzugeben; und
der Arbeitsspeicher eine Gruppe von Programmcodes zum Implementieren von Prozessen speichert, die, wenn sie durch den Prozessor ausgeführt werden, bewirken, dass der Prozessor ein Verfahren nach einem der Ansprüche 1 bis 3 ausführt.

## Revendications

1. Procédé de déverrouillage d'interface d'écran d'un terminal dans lequel le terminal comprend un premier système d'exploitation et un deuxième système d'exploitation, un niveau de sécurité du premier système d'exploitation étant plus élevé qu'un niveau de sécurité du deuxième système d'exploitation, dans lequel le terminal comprend un dispositif d'entrée (603, 202) conçu pour recevoir un mot de passe de déverrouillage d'interface d'écran entré par un utilisateur dans un mode de déverrouillage tactile et pour collecter des informations vocales entrées par l'utilisateur et dans lequel le terminal comprend un dispositif de sortie (604, 2024) conçu pour inviter l'utilisateur à entrer un mot de passe de déverrouillage d'écran correspondant au mode de déverrouillage tactile ; dans lequel le procédé de déverrouillage d'interface d'écran comprend :
lors de la réception d'une instruction de réveil d'interface d'écran, l'invitation de l'utilisateur à entrer un mot de passe de déverrouillage d'écran correspondant au mode de déverrouillage tactile
en réponse à l'invitation, réception (102) du mot de passe de déverrouillage d'écran entré par l'utilisateur et, en même temps, la collecte d'informations vocales entrées par l'utilisateur ;
comparaison du mot de passe de déverrouillage d'écran avec une clé de décryptage d'interface d'écran cible prédéterminée ;
contrôle (104) du terminal pour entrer dans le premier système d'exploitation lorsque le mot de passe de déverrouillage d'écran correspond à la clé de décryptage d'interface d'écran cible prédéterminée et lorsque les informations vocales correspondent aux informations vocales cibles prédéterminées ; et
contrôle (106) du terminal pour entrer dans le deuxième système d'exploitation lorsque le mot de passe de déverrouillage d'écran correspond à la clé de décryptage d'interface d'écran cible prédéterminée et lorsque les informations vocales ne correspondent pas aux informations vocales cibles prédéterminées.

2. Procédé de déverrouillage d'interface d'écran selon la revendication 1, comprenant en outre :
analyse des informations vocales pour générer des données d'empreinte vocale et comparaison (521) des données d'empreinte vocale avec des données d'empreinte vocale prédéterminées ; et
détermination que les informations vocales correspondent avec les informations vocales cibles prédéterminées lorsque les données d'empreinte vocale correspondent avec les données d'empreinte vocale prédéterminées.

3. Procédé de déverrouillage d'interface d'écran selon la revendication 1 ou 2, comprenant en outre :
indication à l'utilisateur que le déverrouillage échoue lorsque le mot de passe de déverrouillage d'écran ne correspond pas avec la clé de décryptage d'interface d'écran cible prédéterminée et lorsque les informations vocales ne correspondent pas aux informations vocales cibles prédéterminées ; et
sortie d'une notification d'alarme lorsque le nombre d'échecs de déverrouillage de l'écran atteint un nombre prédéterminé d'échecs successifs.

4. Dispositif de déverrouillage d'interface d'écran (200) pour un terminal, dans lequel le terminal comprend un premier système d'exploitation et un deuxième système d'exploitation, un niveau de sécurité du premier système d'exploitation étant plus élevé qu'un niveau de sécurité du deuxième système d'exploitation et dans lequel le terminal comprend une fonctionnalité de déverrouillage d'écran comprenant un mode de déverrouillage vocal et un mode de déverrouillage tactile ; dans lequel le dispositif de déverrouillage d'interface d'écran comprend :
une unité d'acquisition (202) comprenant :
un premier module d'invitation (2024) conçu pour inviter l'utilisateur à entrer un mot de passe de déverrouillage d'écran correspondant au mode de déverrouillage tactile lors de la réception d'une instruction de réveil d'interface d'écran ; et
un module d'acquisition (2026) conçu pour recevoir, en réponse à l'invitation, le mot de passe de déverrouillage d'écran entré par l'utilisateur et acquérir les informations vocales entrées par l'utilisateur ;
une unité de mise en correspondance (206) conçue pour comparer le mot de passe de déverrouillage d'écran avec une clé de décryptage d'interface d'écran cible prédéterminée ; et
une unité de contrôle (204) conçue pour :
contrôler le terminal afin d'entrer dans le premier système d'exploitation lorsque le mot de passe de déverrouillage d'écran correspond à la clé de décryptage d'interface d'écran cible prédéterminée et lorsque les informations vocales correspondent aux informations vocales cibles prédéterminées ; et
contrôler le terminal afin d'entrer dans le deuxième système d'exploitation lorsque le mot de passe de déverrouillage d'écran correspond à la clé de décryptage d'interface d'écran cible prédéterminée et lorsque les informations vocales ne correspondent pas aux informations vocales cibles prédéterminées.

5. Dispositif de déverrouillage d'interface d'écran selon la revendication 4, dans lequel
l'unité de mise en correspondance (206) est conçue pour analyser les informations vocales afin de générer des données d'empreinte vocale et comparer les données d'empreinte vocale avec les données d'empreinte vocale prédéterminées ; et
dans lequel le dispositif de déverrouillage d'interface d'écran comprend en outre une unité de détermination (208) conçue pour déterminer que les informations vocales correspondent aux informations vocales cibles prédéterminées lorsque les données d'empreinte vocale correspondent aux données d'empreinte vocale prédéterminées.

6. Dispositif de déverrouillage d'interface d'écran selon la revendication 4 ou 5, comprenant en outre :
une deuxième unité de notification (212) conçu pour notifier à l'utilisateur que le déverrouillage échoue lorsque la clé de déverrouillage d'interface d'écran ne correspond pas à la clé de décryptage d'interface d'écran cible et lorsque les informations vocales ne correspondent par aux informations vocales cibles prédéterminées ; et
une unité d'alarme (214) conçue pour sortir une notification d'alarme lorsque le nombre d'échecs de déverrouillage de l'écran atteint un nombre prédéterminé d'échecs successifs.

7. Terminal comprenant un bus (602), un dispositif (603), un dispositif de sortie (604), une mémoire (605) et un processeur (601), dans lequel le terminal est conçu pour comprendre un premier système d'exploitation et un deuxième système d'exploitation, un niveau de sécurité du premier système d'exploitation étant plus élevé qu'un niveau de sécurité du deuxième système d'exploitation et dans lequel :
le bus est utilisé pour connecter le dispositif d'entrée, le dispositif de sortie, la mémoire et le processeur ;
le dispositif d'entrée est conçu pour recevoir un mot de passe de déverrouillage d'interface d'écran entré par un utilisateur dans un mode de déverrouillage tactile et pour collecter des informations vocales entrées par l'utilisateur lors de la réception d'une instruction de réveil d'interface d'écran ;
le dispositif de sortie (604) est conçu pour inviter l'utilisateur à entrer un mot de passe de déverrouillage d'écran correspondant au mode de déverrouillage tactile ; et
la mémoire stocke un groupe de codes de programmes pour l'implémentation de processus qui, lorsqu'ils sont exécutés par le processeur, fait en sorte que le processeur exécute le procédé selon l'une des revendications 1 à 3.
